# EUROPEAN PATENT APPLICATION

(11) **EP 4 556 267 A1**
(43) Date of publication of application: **21.05.2025**
(21) Application number: 23896121.3
(22) Date of filing: 15.08.2023
(51) Int. Cl.: B60H 1/00, B60H 1/04

(54) **THERMAL MANAGEMENT SYSTEM AND VEHICLE**

(30) Priority: 29.11.2022 CN 202211512426
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310000 (CN)
(72) Inventor: SUN, Ligang, Ningbo, Zhejiang 315000 (CN); XIA, Songyong, Ningbo, Zhejiang 315000 (CN); XING, Xiaodong, Ningbo, Zhejiang 315000 (CN); GAO, Shuai, Ningbo, Zhejiang 315000 (CN); LIU, Yabin, Ningbo, Zhejiang 315000 (CN); LI, Changlong, Ningbo, Zhejiang 315000 (CN)
(74) Representative: Osterhoff, Utz
(86) International application number: PCT/CN2023/113168
(87) International publication number: WO 2024/113961

(57) **Abstract**

Disclosed are a thermal management system and a vehicle. The thermal management system includes a refrigerant circuit and a water circuit. The refrigerant circuit is provided with a liquid refrigerant and includes a corresponding circuit formed through a plurality of components among a compressor, a first heat exchanger, a second heat exchanger, a condenser, a first evaporator, a second evaporator, a first expansion valve, a second expansion valve, and a third expansion valve according to needs. The water circuit is provided with a cooling liquid and includes a corresponding circuit formed through a plurality of components among the first heat exchanger, a first water pump, a drive assembly, a first four-way valve, a second four-way valve, a battery assembly, a second water pump, a three-way valve, and the second heat exchanger according to needs.

## Description

The present application claims priority to Chinese Patent Application No. 202211512426.6, filed on November 29, 2022, the entire contents of which are incorporated herein by reference.

### TECHNICAL FIELD

The present application relates to the technical field of vehicles, and in particular to a thermal management system and a vehicle.

### BACKGROUND

At present, the thermal comfort and heating function of new energy vehicles are relatively large problems compared with traditional fuel vehicles. The majority of producers adopt the heat pump system and the positive temperature coefficient (PTC) heater to solve this problem.

However, the thermal management system using the heat pump system and the PTC heater still has some defects. For example, the present heat pump system is complicated to switch between cooling and heating for passenger compartment, which needs the compressor to stop working, the functional needs can only be achieved by adjusting the on/off valve and different electronic expansion valves, and the PTC heater is also required to provide supplement heat. However, since the heating efficiency of the PTC heater is lower than 1, the start of the PTC heater will increase the energy consumption of the whole vehicle and thus affect the cruising range

### SUMMARY

The main purpose of the present application is to provide a thermal management system, aiming to simplify the thermal management system and reduce the energy consumption of the whole vehicle.

To achieve the above purpose, the thermal management system provided in the present application includes:
a refrigerant circuit provided with a liquid refrigerant and including a corresponding circuit formed through a plurality of components among a compressor, a first heat exchanger, a second heat exchanger, a condenser, a first evaporator, a second evaporator, a first expansion valve, a second expansion valve, and a third expansion valve according to needs; and
a water circuit provided with a cooling liquid and including a corresponding circuit formed through a plurality of components among the first heat exchanger, a first water pump, a drive assembly, a first four-way valve, a second four-way valve, a battery assembly, a second water pump, a three-way valve, and a second heat exchanger according to needs.

In an embodiment, the thermal management system further includes: an air conditioner main unit including a first heat exchange air duct, a second heat exchange air duct and a circulating air duct; the first heat exchange air duct is provided with a condenser, a first air inlet end and a first air outlet end, the first air inlet end includes a first air inlet communicated with a circulating air inlet and a second air inlet communicated with an outside of a vehicle, and the first air outlet end is respectively communicated with a first air outlet communicated with an inside of the vehicle and a second air outlet communicated with the outside of the vehicle;
the second heat exchange air duct is provided with a first evaporator, a second air inlet end and a second air outlet end, the second air inlet end includes a third air inlet communicated with the circulating air inlet and a fourth air outlet communicated with the outside of the vehicle, and the second air outlet end is respectively communicated with the third air outlet communicated with the inside of the vehicle and the fourth air outlet communicated with the outside of the vehicle; and
the circulating air duct is configured to recycle an air after heat exchange through the first heat exchange air duct and circulate the air to the first air inlet.

In an embodiment, the refrigerant circuit includes a first circuit and a second circuit, the first circuit is a closed circuit formed by the compressor, the second heat exchanger, the condenser, the first expansion valve, and the first heat exchanger connected in series in sequence, the second circuit is a closed circuit formed by the first evaporator, the second expansion valve, the third expansion valve, and the second evaporator connected in series in sequence, a flow channel between the second evaporator and the first evaporator is connected in series with a flow channel between the compressor and the first heat exchanger, and a flow channel between the second expansion valve and the third expansion valve is connected in series with a flow channel between the condenser and the first expansion valve.

In an embodiment, the thermal management system has a first heating state;
in the first heating state, the water circuit includes a motor circuit and a battery circuit connected in parallel through the first four-way valve and the second four-way valve, the motor circuit and the refrigerant circuit are connected in parallel through the first heat exchanger, and the battery circuit and the refrigerant circuit are connected in parallel through the second heat exchanger;
the motor circuit is a closed circuit formed by the first water pump, the drive assembly, the first four-way valve, the first heat exchanger, the second four-way valve, and the three-way valve connected in series in sequence; and
the battery circuit is a closed circuit formed by the first four-way valve, the second heat exchanger, the second four-way valve, the second water pump, and the battery assembly connected in series in sequence.

In an embodiment, in the first heating state, the first air inlet, the second air inlet, the third air inlet, the fourth air outlet and the circulating air duct are all communicated, and the in-vehicle circulating air inlet, the first air outlet, the second air outlet, the third air outlet and the fourth air inlet are all blocked, so that an air outside the vehicle is configured to enter the first heat exchange air duct for heat exchange and pass through the first circulating air duct; and a part of the air is configured to enter the first air inlet to continue circulation, and another part of the air is configured to flow into the second heat exchange air duct through the third air inlet for heat exchange and is discharged out of the vehicle.

In an embodiment, the thermal management system has a second heating state; and
in the second heating state, the water circuit is connected in parallel with the refrigerant circuit through the first heat exchanger and the second heat exchanger respectively, and the water circuit is configured as a closed circuit formed by the first water pump, the drive assembly, the first four-way valve, the second heat exchanger, the second four-way valve, the second water pump, the battery assembly, the first four-way valve, the first heat exchanger, the second four-way valve, and the three-way valve connected in series in sequence.

In an embodiment, in the second heating state, the in-vehicle circulating air inlet, the first air inlet, the second air inlet, the fourth air inlet, the first air outlet and the fourth air outlet are all communicated, and the third air inlet, the second air outlet, the third air outlet and the circulating air duct are all blocked, so that the air after heat exchange through the first heat exchange air duct is discharged into the vehicle and is circulated to the first heat exchange air duct together with an air inside the vehicle.

In an embodiment, the drive assembly includes a first drive motor, a first control assembly, a second drive motor and a second control assembly, the water circuit includes a first branch and a second branch provided in parallel, the first drive motor and the first control assembly are connected in series to the first branch, and the second drive motor and the second control assembly are connected in series to the second branch.

In an embodiment, the thermal management system further includes: a first liquid storage apparatus communicated with the refrigerant circuit to replenish the refrigerant circuit; and/or
a second liquid storage apparatus communicated with the water circuit to replenish the water circuit.

The present application also provides a vehicle, including the thermal management system.

In the technical solution of the present application, a refrigerant circuit and a water circuit are provided. The refrigerant circuit includes a corresponding circuit formed through a plurality of components among a compressor, a first heat exchanger, a second heat exchanger, a condenser, a first evaporator, a second evaporator, a first expansion valve, a second expansion valve, and a third expansion valve according to needs. The water circuit is provided with the cooling liquid, and the water circuit includes a corresponding circuit formed through a plurality of components among the first heat exchanger, a first water pump, a drive assembly, a first four-way valve, a second four-way valve, a battery assembly, a second water pump, a three-way valve, and a second heat exchanger according to needs.. Compared with the thermal management system with the heat pump system and the heater in the related art, the refrigerant circuit and the water circuit in the present application are simpler, and there is no need for an additional heater. The heat generated by the recycle drive assembly of the first heat exchanger is used to heat the liquid refrigerant in the refrigerant circuit, so that the compressor, the condenser, the first evaporator and the second evaporator are turned on smoothly, thereby reducing the energy consumption of the vehicle.

### BRIEF DESCRIPTION OF THE DRAWINGS

In order to illustrate the technical solutions in the embodiments of the present application or in the related art more clearly, the following briefly introduces the accompanying drawings required for the description of the embodiments or the related art. Obviously, the drawings in the following description are only part of embodiments of the present application. For those skilled in the art, other drawings can also be obtained according to the structures shown in these drawings without any creative effort.
FIG. 1 is a structural schematic view of a thermal management system according to an embodiment of the present application.
FIG. 2 is a structural schematic view of the thermal management system of FIG. 1 in a first heating state.
FIG. 3 is a partially enlarged view at A in FIG. 2.
FIG. 4 is a structural schematic view of the thermal management system of FIG. 1 in a second heating state.
FIG. 5 is a partially enlarged view at B in FIG. 4.

**Reference sign description:**

| Reference sign | Name | Reference sign | Name |
|---|---|---|---|
| 10 | thermal management system | 37 | three-way valve |
| 20 | refrigerant circuit | 40 | air conditioner main unit |
| 21 | compressor | 41 | first heat exchange air duct |
| 22 | first heat exchanger | 411 | first air inlet end |
| 23 | second heat exchanger | 412 | first air outlet end |
| 24 | condenser | 413 | in-vehicle circulating air inlet |
| 25 | first evaporator | 414 | first air inlet |
| 26 | second evaporator | 415 | second air inlet |
| 27 | first expansion valve | 416 | first air outlet |
| 28 | second expansion valve | 417 | second air outlet |
| 29 | third expansion valve | 42 | second heat exchange air duct |
| 30 | water circuit | 421 | second air inlet end |
| 31 | first water pump | 422 | second air outlet end |
| 32 | drive assembly | 423 | third air inlet |
| 321 | first drive motor | 424 | fourth air inlet |
| 322 | first control assembly | 425 | third air outlet |
| 323 | second drive motor | 426 | fourth air outlet |
| 324 | second control assembly | 43 | circulating air duct |
| 33 | first four-way valve | 50 | motor circuit |
| 34 | second four-way valve | 60 | battery circuit |
| 35 | battery assembly | 70 | first liquid storage apparatus |
| 36 | second water pump | 80 | second liquid storage apparatus |

The realization of the objective, functional characteristics, and advantages of the present application are further described with reference to the accompanying drawings.

### DETAILED DESCRIPTION OF THE EMBODIMENTS

The technical solutions of the embodiments of the present application will be described in more detail below with reference to the accompanying drawings. It is obvious that the embodiments to be described are only some rather than all of the embodiments of the present application. All other embodiments obtained by those skilled in the art based on the embodiments of the present application without creative efforts shall fall within the scope of the present application.

It should be noted that all directional indications (such as up, down, left, right, front, back, etc.) in the embodiments of the present application are only used to explain the relative positional relationship, the movement situation, etc. If the specific posture changes, the directional indication also changes accordingly.

In addition, the descriptions of "first", "second", etc. are only for the purpose of description, and should not be construed as indicating or implying relative importance or implicitly indicates the number of technical features indicated. Thus, a feature delimited with "first", "second" may expressly or implicitly include at least one of that feature. In addition, the meaning of "and/or" in the present application includes three parallel schemes, taking "A and/or B" as an example, including scheme A, or scheme B, or scheme A and B at the same time. In addition, the technical solutions between the various embodiments can be combined with each other, but must be based on the realization by those skilled in the art. When the combination of technical solutions is contradictory or cannot be realized, it should be considered that the combination of such technical solutions does not exist or fall within the scope of protection claimed in the present application.

The present application provides a thermal management system 10.

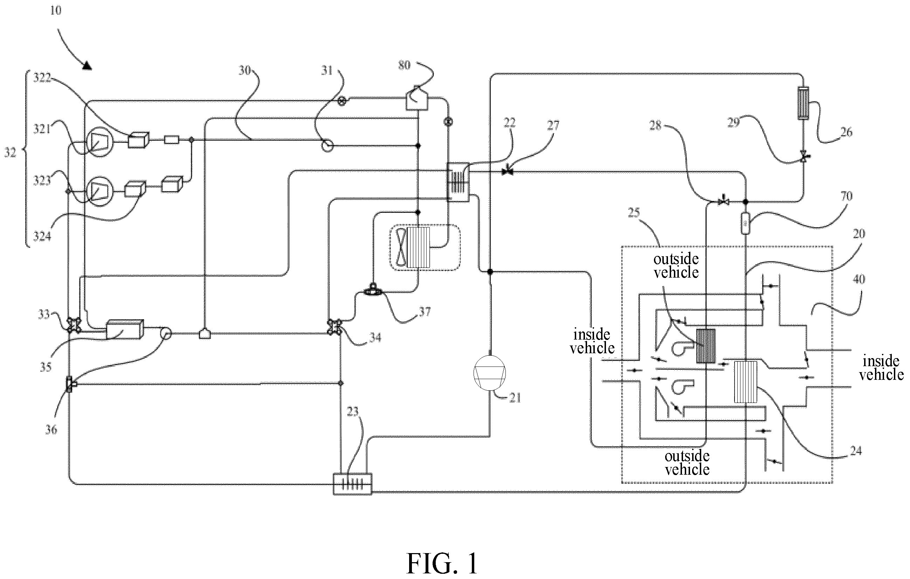

In an embodiment of the present application, as shown in FIG. 1, the thermal management system 10 includes a refrigerant circuit 20 and a water circuit 30. The liquid refrigerant is provided in the refrigerant circuit 20. The refrigerant circuit 20 includes a corresponding circuit formed through a plurality of components among a compressor 21, a first heat exchanger 22, a second heat exchanger 23, a condenser 24, a first evaporator 25, a second evaporator 26, a first expansion valve 27, a second expansion valve 28, and a third expansion valve 29 according to needs. The water circuit 30 is provided with a cooling liquid, and the water circuit 30 includes a corresponding circuit formed through a plurality of components among a first heat exchanger 22, a first water pump 31, a drive assembly 32, a first four-way valve 33, a second four-way valve 34, a battery assembly 35, a second water pump 36, a three-way valve 37, and a second heat exchanger 23 according to needs.

Specifically, in the refrigerant circuit 20, the first expansion valve 27, the second expansion valve 28 and the third expansion valve 29 are all configured to throttle the refrigerant circuit 20, thereby reducing the temperature of the liquid refrigerant. The first evaporator 25, the second evaporator 26 and the condenser 24 are all configured to adjust the temperature in the passenger compartment. The first evaporator 25 and the condenser 24 are configured to adjust the temperature in the front passenger compartment, the second evaporator 26 is configured to adjust the temperature in the rear passenger compartment, and the first heat exchanger 22 is connected in parallel with the water circuit 30, so as to recycle the heat generated by the drive assembly 32. The second heat exchanger 23 is also connected in parallel with the water circuit 30, so as to heat the battery assembly 35. The first heat exchanger 22 and the second heat exchanger 23 can be a water heat exchanger or a chiller heat exchanger, etc. The compressor 21 is configured to heat the refrigerant circuit 20. In the water circuit 30, the drive assembly 32 is configured to heat the water circuit 30 or the refrigerant circuit 20. The first water pump 31 and the second water pump 36 are configured to drive and adjust the flow of the cooling liquid in the water circuit 30. The first four-way valve 33, the second four-way valve 34 and the three-way valve 37 are configured to change the flowing direction of the cooling liquid in the water circuit 30, and the refrigerant circuit 20 and the water circuit 30 are provided with a plurality of control valves to form corresponding circuits according to the needs of different heat management modes, and interact with each other to achieve a preset effect. The first four-way valve 33, the second four-way valve 34 and the three-way valve 37 configured in the heat management system are all multi-pass control valves, which can not only control the flowing direction of the water circuit 30, but also control the flow of the cooling liquid, so that the thermal management system 10 can freely distribute the flow according to actual needs, thereby improving the energy efficiency of the system and the stability of system control. Of course, in other embodiments, the multi-way control valve can also be replaced by a control valve group to control the flowing direction of the cooling liquid in the water circuit 30.

In the related art, due to the low temperature in the cold winter, it is difficult to start the refrigerant circuit 20 by itself, so a heater is often needed for supplementary heating. When the thermal management system 10 is working, the heater is first turned on to heat the refrigerant circuit 20, so as to ensure that the compressor 21, the condenser 24, the first evaporator 25 and the second evaporator 26 are smoothly turned on, and the heater can be a PTC heater. Since the heating efficiency of the PTC heater is lower than 1, the start of the PTC heater will increase the energy consumption of the whole vehicle and thus affect the cruising range. In this solution, there is no need for an additional heater. The heat generated by the recycle drive assembly 32 of the first heat exchanger 22 is configured to heat the liquid refrigerant in the refrigerant circuit 20, so that the compressor 21, the condenser 24, the first evaporator 25 and the second evaporator 26 can be turned on smoothly, thereby reducing the vehicle energy consumption.

In the technical solution of the present application, the refrigerant circuit 20 and the water circuit 30 are provided. The refrigerant circuit 20 includes a corresponding circuit formed through a plurality of components among the compressor 21, the first heat exchanger 22, the second heat exchanger 23, the condenser 24, the first evaporator 25, the second evaporator 26, the first expansion valve 27, the second expansion valve 28, and the third expansion valve 29 according to needs. The water circuit 30 is provided with the cooling liquid. The water circuit 30 includes a corresponding circuit formed through a plurality of components among the first heat exchanger 22, the first water pump 31, the drive assembly 32, the first four-way valve 33, the second four-way valve 34, the battery assembly 35, the second water pump 36, the three-way valve 37, and the second heat exchanger 23 according to needs. Compared with the thermal management system 10 using a heat pump system and a heater in the related art, the refrigerant circuit 20 and the water circuit 30 in this embodiment are simpler, and no additional heater is required. The heat generated by the recycle drive assembly 32 of the first heat exchanger 22 is configured to heat the liquid refrigerant in the refrigerant circuit 20, so that the compressor 21, the condenser 24, the first evaporator 25 and the second evaporator 26 are turned on smoothly, thereby reducing the energy consumption of the vehicle.

Referring to FIG. 1 to FIG. 5, in an embodiment, the thermal management system 10 further includes an air conditioner main unit 40. The air conditioner main unit 40 includes a first heat exchange air duct 41, a second heat exchange air duct 42 and a circulating air duct 43. The first heat exchange air duct 41 is provided with a condenser 24, and the first heat exchange air duct 41 is provided with a first air inlet end 411 and a first air outlet end 412. The first air inlet end 411 includes a first air inlet 414 communicated with a circulating air inlet and a second air inlet 415 communicated with an outside of the vehicle, and the first air outlet end 412 is respectively communicated with a first air outlet 416 communicated with an inside of the vehicle and a second air outlet 417 communicated with the outside of the vehicle.

The second heat exchange air duct 42 is provided with a first evaporator 25, and the second heat exchange air duct 42 is provided with a second air inlet end 421 and a second air outlet end 422. The second air inlet end 421 includes a third air inlet 423 communicated with a circulating air inlet and a fourth air inlet 424 communicated with the outside of the vehicle. The second air outlet end 422 is respectively communicated with third air outlet 425 communicated with the inside of the vehicle and a fourth air outlet 426 communicated with the outside of the vehicle.

The circulating air duct 43 is configured to recycle air after heat exchange through the first heat exchange air duct 41, and circulate it to the first air inlet 414.

Specifically, the circulating air inlet includes an in-vehicle circulating air inlet 413. One end of the in-vehicle circulating air inlet 413 is communicated with the in-vehicle, and the other end of the in-vehicle circulating air inlet 413 is communicated with the first air inlet 414 and the third air inlet 423. The air inlet end of the circulating air duct 43 is communicated with the first air outlet end 412, and the air outlet end of the circulating air duct 43 can be connected to the first air inlet end 411 so as to be communicated with the first air inlet 414, or connected between the in-vehicle circulating air inlet 413 and the first air inlet 414. The first heat exchange air duct 41 is provided with a condenser 24 configured to heat the air in the first heat exchange air duct 41. Therefore, in the heating mode, the fresh air formed by the external air being filtered through the vehicle air filtration system enters the first heat exchange air duct 41 through the second air inlet 415, and the air heated by the first heat exchange air duct 41 passes through the first air outlet end 412 and is discharged into the vehicle through the first air outlet 416, so as to heat the vehicle. The fresh air formed by the external air being filtered through the vehicle air filtration system enters the second heat exchange air duct 42 through the fourth air inlet 424, and the air cooled by the second heat exchange air duct 42 passes through the second air outlet end 422 and is discharged outside the vehicle through the fourth air outlet 426, so as to complete the air flow direction in the heating mode, and heat the vehicle. It should be noted that the "communicated with" indicated in the present application only indicates the connection relationship between different ventilation ducts, and does not represent their communicated status. Whether they are communicated or whether each air duct is blocked is controlled by its corresponding control switch. For example, the first air outlet end 412 is respectively communicated with the first air outlet 416 communicated with the inside of the vehicle and the second air outlet 417 communicated with the outside of the vehicle. The first air outlet end 412 can be only communicated with the first air outlet 416, or can be only communicated with the second air outlet 417, or can be communicated with both the first air outlet 416 and the second air outlet 417. In this embodiment, the meaning of that the first air outlet end 412 refers to a section of the air duct between the location of the condenser 24 and the first air outlet 416 and the second air outlet 417, and the first air outlet end 412 is respectively communicated with the first air outlet 416 and the second air outlet 417 can be: the first air outlet end 412 is directly communicated with the first air outlet 416 and the second air outlet 417, that is, the first air outlet 416 and the second air outlet 417 are directly opened at the end of the first air outlet end 412 away from the condenser 24; or the first air outlet end 412 is indirectly connected to the first air outlet 416 and the second air outlet 417. For example the first air outlet end 412 is respectively connected to the first air outlet 416 and the second air outlet 417 through a preset air duct. The second heat exchange air duct 42 is provided with a first evaporator 25 configured to cool the air in the second heat exchange air duct 42. In this embodiment, the meaning of that the second air outlet end 422 refers to a section of the air duct between the location of the first evaporator 25 and the third air outlet 425 and the fourth air outlet 426, and the second air outlet end 422 is respectively communicated with the third air outlet 425 and the fourth air outlet 426 can be: the second air outlet end 422 is directly communicated with the third air outlet 425 and the fourth air outlet 426, that is, the third air outlet 425 and the fourth air outlet 426 are directly opened in the second air outlet end 422; or the second air outlet end 422 is indirectly connected to the third air outlet 425 and the fourth air outlet 426. For example, the second air outlet end 422 is respectively connected to the third air outlet 425 and the fourth air outlet 426 through the preset air duct.

However, in actual operation, especially in extremely cold or hot seasons, such as in cold winter, the outdoor ambient temperature is very low. Therefore, the temperature of the fresh air sucked from the outside by the first heat exchange air duct 41 is also very low, which may cause the suction temperature and suction pressure of the compressor 21 to be too low, and is not conducive to the heat exchange of the condenser 24, resulting in the difficulty of the thermal management system 10 to quickly enter the working state and the heating rate to slow down. Therefore, the circulating air duct 43 is provided to recycle the air after heat exchange through the first heat exchange air duct 41, so as to increase the inlet air temperature of the first evaporator 25 within a period of time after the air conditioner main unit 40 is just started, thereby facilitating the air conditioning system to quickly enter the working state. The circulating air duct 43 can recycle the air heated by the condenser 24 to the second heat exchange air duct 42, increase the temperature of the air entering the second heat exchange air duct 42 so as to assist the first evaporator 25 in heat exchange, and increase the temperature of the liquid refrigerant in the first evaporator 25 so as to increase the temperature of the liquid refrigerant through the flow of the liquid refrigerant in the refrigerant circuit 20, thereby facilitating the air conditioner main unit 40 to quickly enter the working state. By controlling the on/off of the circulating air duct 43, the switching of different working modes or states of the air conditioner main unit 40 can be adapted. Moreover, the conduction and blocking of the first air inlet 414, the second air inlet 415, the third air inlet 423, the fourth air inlet 424, the first air outlet 416, the second air outlet 417, the third air outlet 425, the fourth air outlet 426 and the circulating air inlet can be adjusted according to the switching of different working modes or states of the thermal management system 10.

In an embodiment, referring to FIG. 1, FIG. 2 and FIG. 4, the refrigerant circuit 20 includes a first circuit and a second circuit. The first circuit is a closed circuit formed by the compressor 21, the second heat exchanger 23, the condenser 24, the first expansion valve 27 and the first heat exchanger 22 connected in series. The second circuit is a closed circuit formed by the first evaporator 25, the second expansion valve 28, the third expansion valve 29 and the second evaporator 26 connected in series. A flow channel between the second evaporator 26 and the first evaporator 25 is connected in series to a flow channel between the compressor 21 and the first heat exchanger 22, and a flow channel between the second expansion valve 28 and the third expansion valve 29 is connected in series to a flow channel between the condenser 24 and the first expansion valve 27. Specifically, the flow direction of the liquid refrigerant will be described below by taking the first heat exchanger 22 as the starting point of the refrigerant as an example. In the first circuit, after the first heat exchanger 22 recycles the heat generated by the drive assembly 32 to increase the temperature of the liquid refrigerant, the liquid refrigerant further heated by the compressor 21 passes through the second heat exchanger 23, and transfers the heat to the battery assembly 35, thereby heating the battery assembly 35 and improving the working efficiency of the battery assembly 35. Then, the liquid refrigerant flows through the condenser 24 to heat the passenger compartment, and flows back to the first heat exchanger 22 after being throttled again by the first expansion valve 27. In the second circuit, the liquid refrigerant passes through the first evaporator 25 and passes through the second expansion valve 28 to further cool down, and passes through the third expansion valve 29 and passes through the second evaporator 26 to adjust the temperature and flows back to the first evaporator 25. The first circuit and the second circuit undergo two confluences and diversions of the liquid refrigerant, thereby neutralizing the temperature of the liquid refrigerant. The first confluence and diversion occurs when the cooling liquid in the first circuit flows between the first heat exchanger 22 and the compressor 21, and the cooling liquid in the second circuit flows between the second evaporator 26 and the first evaporator 25, that is, the flow channel between the first heat exchanger 22 and the compressor 21 is communicated with the flow channel between the second evaporator 26 and the first evaporator 25 through a four-way pipe, thereby mixing the liquid refrigerant and neutralizing the heat of the liquid refrigerant; and the second confluence and diversion occurs when the cooling liquid in the first circuit flows between the condenser 24 and the first expansion valve 27, and the cooling liquid in the second circuit flows between the second expansion valve 28 and the third expansion valve 29, that is, the flow channel between the condenser 24 and the first expansion valve 27 is communicated with the flow channel between the second expansion valve 28 and the third expansion valve 29 through a four-way pipe, thereby mixing the liquid refrigerant and neutralizing the heat of the liquid refrigerant.

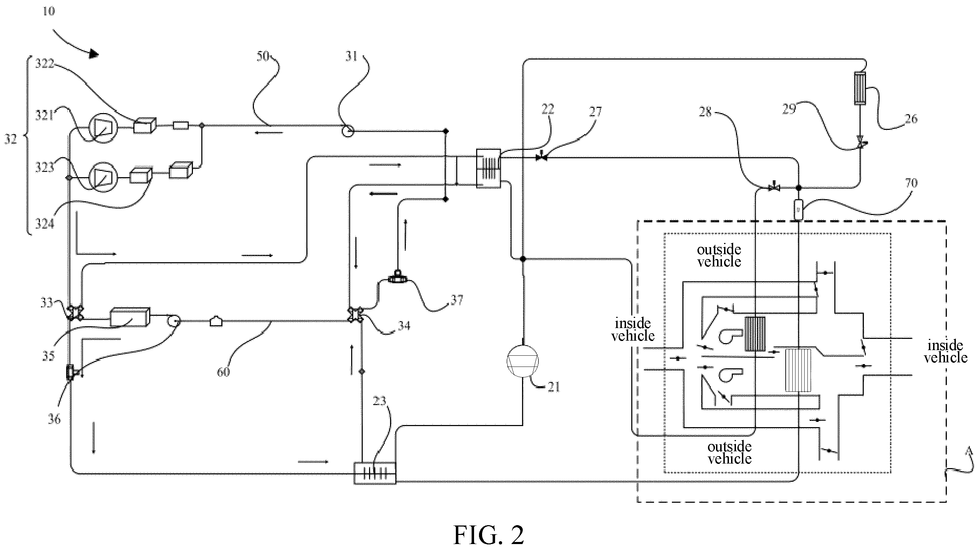

Referring to FIG. 2, in an embodiment, the thermal management system 10 has a first heating state. In the first heating state, the water circuit 30 includes a motor circuit 50 and a battery circuit 60. The motor circuit 50 and the battery circuit 60 are connected in parallel through the first four-way valve 33; the second four-way valve 34, the motor circuit 50 and the refrigerant circuit 20 are connected in parallel through the first heat exchanger 22; and the battery circuit 60 and the refrigerant circuit 20 are connected in parallel through the second heat exchanger 23.

The motor circuit 50 is a closed circuit formed by the first water pump 31, the drive assembly 32, the first four-way valve 33, the first heat exchanger 22, the second four-way valve 34, and the three-way valve 37 connected in series.

The battery circuit 60 is a closed circuit formed by the first four-way valve 33, the second heat exchanger 23, the second four-way valve 34, the second water pump 36, and the battery assembly 35 connected in series.

In an embodiment, in the first heating state, the flow direction of the liquid refrigerant in the refrigerant circuit 20 is configured as the above-mentioned flow direction. As shown in FIG. 2, FIG. 2 is a structural schematic view of the thermal management system 10 of FIG. 1 in a first heating state, and the direction indicated by the arrow in the figure is the flow direction of the cooling liquid in the motor circuit 50 and the battery circuit 60. The motor circuit 50 and the battery circuit 60 are connected in parallel through the first four-way valve 33 and the second four-way valve 34, that is, no heat exchange occurs. In the motor circuit 50, the cooling liquid is driven by the first water pump 31 to reciprocate between the drive assembly 32 and the first heat exchanger 22, and continuously flows through the first four-way valve 33, the second four-way valve 34 and the three-way valve 37, thereby recycling the heat of the drive assembly 32. In the battery circuit 60, the cooling liquid is driven by the second water pump 36 to reciprocate between the battery assembly 35 and the second heat exchanger 23, and continuously flows through the first four-way valve 33 and the second four-way valve 34, so as to heat the battery assembly 35 and improve the working efficiency of the battery assembly 35. The first heating state is the working state when the vehicle thermal management system 10 is just started. At this time, the air conditioner main unit 40 is first turned on to make the wind wheels in the first heat exchange air duct 41 and the second heat exchange air duct 42 rotate at a low speed. Then the first water pump 31 controls the motor circuit 50 to flow with a small flow rate, so as to quickly heat the cooling liquid and transfer the temperature to the refrigerant circuit 20 through the first heat exchanger 22. After the temperature of the liquid refrigerant in the refrigerant circuit 20 reaches the first temperature, the compressor 21 starts to work to further heat the liquid refrigerant, thus the related apparatus in the refrigerant circuit 20 can work stably, and the wind wheel speed is increased to make the refrigerant circuit 20 work normally, so that the air conditioner main unit 40 can quickly realize the normal operation of the refrigerant circuit 20 without using a heater to provide the supplement heat.

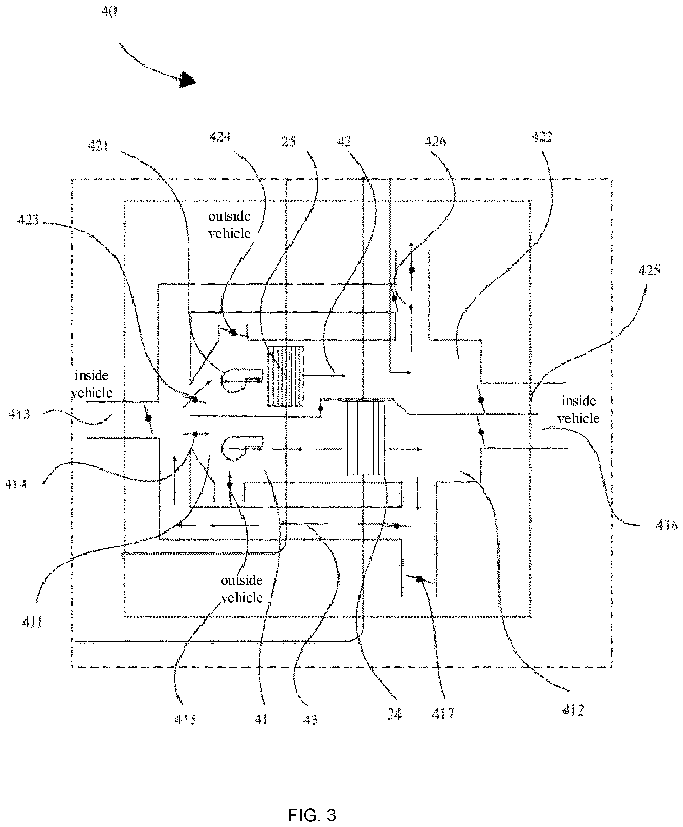

In an embodiment, referring to FIG. 3, in the first heating state, the first air inlet 414, the second air inlet 415, the third air inlet 423, the fourth air outlet 426 and the circulating air duct 43 are all turned on, and the in-vehicle circulating air inlet 413, the first air outlet 416, the second air outlet 417, the third air outlet 425 and the fourth air inlet 424 are all blocked, so that the air outside the vehicle enters the first heat exchange air duct 41 for heat exchange and passes through the first circulating air duct 43. After that, part of the air enters the first air inlet 414 to continue circulating, and the other part of the air flows into the second heat exchange air duct 42 through the third air inlet 423 for heat exchange and is discharged out of the vehicle. Specifically, as shown in FIG. 3, FIG. 3 is a structural schematic view of the air conditioner main unit 40 when the thermal management system 10 is in the first heating state, and the direction indicated by the arrow in the figure is the flow direction of the airflow in the air conditioner main unit 40. The fresh air outside the vehicle enters the first heat exchange air duct 41 from the second air inlet 415, and enters the circulating air duct 43 after being heated by the condenser 24. The air outlet end of the circulating air duct 43 is communicated with the first air inlet 414 and the third air inlet 423, so that a part of the air enters from the first air inlet 414 and is neutralized with the fresh air entering from the second air inlet 415 and flows into the first heat exchange air duct 41 together, thereby neutralizing and increasing the inlet temperature of the fresh air, increasing the inlet temperature of the first heat exchange air duct 41, reducing heat waste, and reducing the power required for the condenser 24 to work. The other part of the air flows into the second heat exchange air duct 42 from the third air inlet 423 for heat exchange, thereby increasing the inlet air temperature of the second heat exchange air duct 42. The first evaporator 25 recycles the waste heat, assists the first evaporator 25 in heat exchange, and helps the thermal management system 10 to quickly enter the working state. Since the inlet air temperature of the second heat exchange air duct 42 increases, it can also further heat the liquid refrigerant in the refrigerant circuit 20, thereby increasing the refrigerant temperature of the entire refrigerant circuit 20, and improving the heating efficiency. In this embodiment, the air temperature recycling is all completed by the circulating air duct 43, and the air does not pass through the inside of the vehicle. Not only is the heat recycling efficiency high, but also it does not pass through the inside of the vehicle, thus no additional water vapor will be generated. The air in the air conditioner main unit 40 is introduced from the inside of the vehicle as a whole and discharged to the outside of the vehicle, which not only effectively recycles heat, but also has less water vapor content in the fresh air outside the vehicle, thereby reducing the possibility of vehicle fogging.

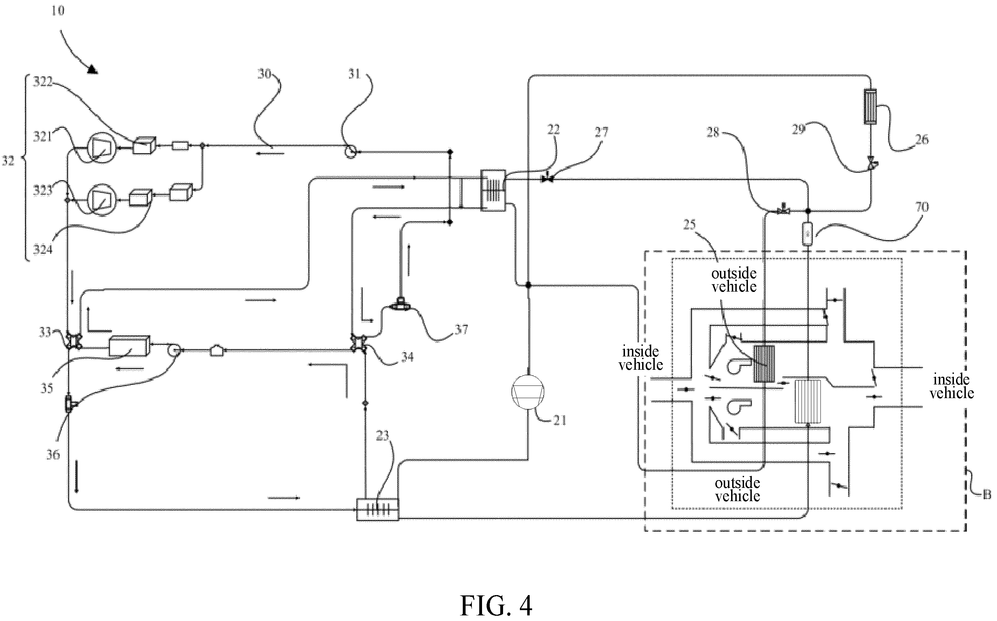

Referring to FIG. 4, in an embodiment, the thermal management system 10 has a second heating state. In the second heating state, the water circuit 30 is connected in parallel with the refrigerant circuit 20 respectively through the first heat exchanger 22 and the second heat exchanger 23. The water circuit 30 is configured as a closed circuit formed by the first water pump 31, the drive assembly 32, the first four-way valve 33, the second heat exchanger 23, the second four-way valve 34, the second water pump 36, the battery assembly 35, the first four-way valve 33, the first heat exchanger 22, the second four-way valve 34, and the three-way valve 37 connected in series in sequence. Specifically, in the first heating state, the flow direction of the liquid refrigerant in the refrigerant circuit 20 is configured as the above-mentioned flow direction. As shown in FIG. 4, FIG. 4 is a structural schematic view of the thermal management system 10 in the second heating state, and the direction indicated by the arrow in the figure is the flow direction of the cooling liquid in the water circuit 30. The water circuit 30 is a water circuit 30 connected in series in sequence. The flow direction of the cooling liquid is described below by taking the first heat exchanger 22 as the starting point of the cooling liquid as an example. Driven by the first water pump 31, the cooling liquid transfers the heat generated by the drive assembly 32 to the refrigerant circuit 20 through the first heat exchanger 22, flows through the drive assembly 32 again and absorbs the heat of the drive assembly 32, flows through the first four-way valve 33 and passes through the second heat exchanger 23 to further heat the cooling liquid, flows through the second four-way valve 34, flows through the battery assembly 35 driven by the second water pump 36 to heat the battery assembly 35, flows through the first four-way valve 33 and the second four-way valve 34 in sequence again, and flows back to the first heat exchanger 22. The first heat exchanger 22 recycles the waste heat of the second heat exchanger 23 and the drive assembly 32. The second heating state, that is, when the thermal management system 10 is in a stable state, requires improving the heat utilization rate in the thermal management system 10 as much as possible. The heat generated by the second heat exchanger 23 and the drive assembly 32 is recycled through the first heat exchanger 22, thereby reducing the heat waste in the thermal management system 10, improving the heat utilization rate, and reducing the overall energy consumption of the vehicle.

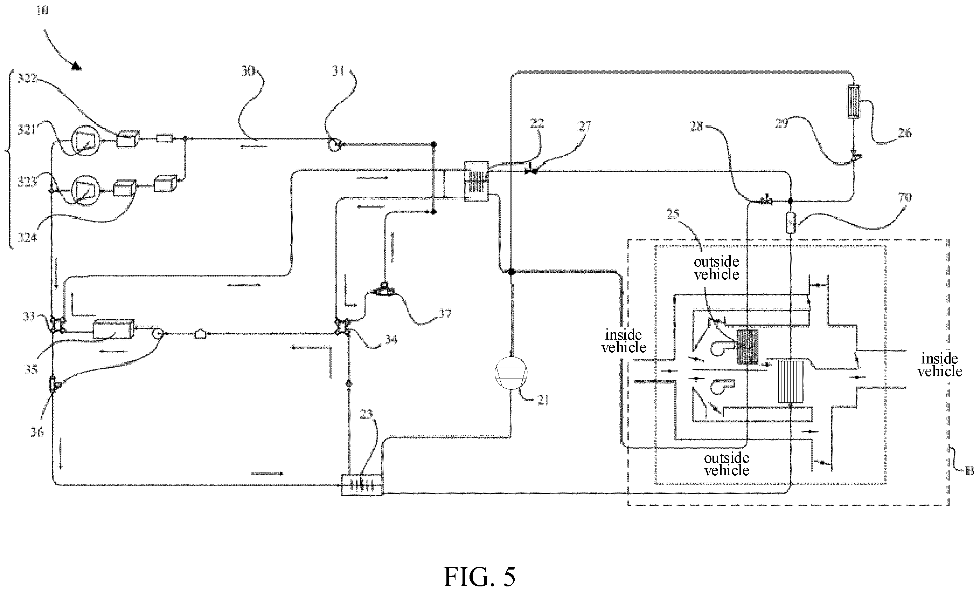

In an embodiment, in the second heating state, the in-vehicle circulating air inlet 413, the first air inlet 414, the second air inlet 415, the fourth air inlet 424, the first air outlet 416 and the fourth air outlet 426 are all communicated, and the third air inlet 423, the second air outlet 417, the third air outlet 425 and the circulating air duct 43 are all blocked, so that the air after heat exchange through the first heat exchange air duct 41 is discharged into the vehicle and is circulated again to the first heat exchange air duct 41 together with the air inside the vehicle. Specifically, as shown in FIG. 5, FIG. 5 is a structural schematic view of the air conditioner main unit 40 when the thermal management system 10 is in the second heating state, and the direction indicated by the arrow in the figure is the flow direction of the airflow in the air conditioner main unit 40. After the thermal management system 10 has been working for a while, and the first evaporator 25 normally enters the working state, the in-vehicle circulating air inlet 413, the fourth air inlet 424, and the first air outlet 416 are adjusted to open, the third air inlet 423 and the second air outlet 41 are closed, and the first circulating air duct 43 is blocked. The first heating state is switched to the second heating state, so that the fresh air outside the vehicle enters the first heat exchange air duct 41 through the second air inlet 415, and the air heated by the condenser 24 flows into the vehicle through the first air outlet 416. After heating the inside of the vehicle, the air flows into the first air inlet 414 again from the in-vehicle circulating air inlet 413, so that the air is neutralized with the fresh air entering from the second air inlet 415 and flows into the first heat exchange air duct 41 together, thereby neutralizing and increasing the inlet temperature of the fresh air, increasing the temperature of the first heat exchange air duct 41, and reducing the heat waste and the power required for the operation of the condenser 24. In addition, the fresh air outside the vehicle enters the second heat exchange air duct 42 from the fourth air inlet 424, and the first evaporator 25 discharges the air from the fourth air outlet 426 after the heat exchange is carried out normally.

Referring to FIG. 1, FIG. 2 and FIG. 4, in an embodiment, the drive assembly 32 includes a first drive motor 321, a first control assembly 322, a second drive motor 323 and a second control assembly 324. The water circuit 30 includes a first branch and a second branch arranged in parallel. The first drive motor 321 and the first control assembly 322 are connected in series to the first branch; and the second drive motor 323 and the second control assembly 324 are connected in series to the second branch. Specifically, the first drive motor 321 is a front drive motor, and the second drive motor 323 is a rear drive motor. The first branch and the second branch are arranged in parallel. Compared with that the first branch and the second branch are connected in series, this solution can increase the flow of the cooling liquid in the water circuit 30, increase the heat recycling efficiency of the drive assembly 32, and reduce the heat loss. In other embodiments, the first branch and the second branch can also be arranged in parallel.

In an embodiment, referring to FIG. 1, the thermal management system 10 further includes a first liquid storage apparatus 70 communicated with the refrigerant circuit 20 to replenish the refrigerant circuit 20. Specifically, the first liquid storage apparatus 70 can be provided at any position of the refrigerant circuit 20. In this embodiment, the first liquid storage apparatus 70 is after the condenser 24, so as to facilitate the subsequent heat neutralization of the first circuit and the second circuit.

In another embodiment, the thermal management system 10 further includes a second liquid storage apparatus 80 communicated with the water circuit 30 to replenish the water circuit 30. The second liquid storage apparatus 80 can be provided at any position of the water circuit 30. In this embodiment, the second liquid storage apparatus 80 is communicated with the first water pump 31 and the second water pump 36 respectively. Since the first water pump 31 and the second water pump 36 can both speed up the flow of water, the efficiency of replenishment is improved.

The present application also provides a vehicle, including the thermal management system 10. The specific structure of the thermal management system 10 refers to the above-mentioned embodiment. Since the vehicle adopts all the technical solutions of all the above-mentioned embodiments, it has at least all the beneficial effects brought by the technical solutions of the above-mentioned embodiments, which will not be repeated here.

The above embodiments are only part of the present application and do not therefore limit the scope of the present application. Any equivalent structure or equivalent process transformation made by using the contents and drawings of the present application under the inventive concept of the present application, or directly or indirectly used in other relevant technical fields, are included in the scope of the present application.

## Claims

1. A thermal management system, **characterized by** comprising:
a refrigerant circuit provided with a liquid refrigerant and comprising a corresponding circuit formed through a plurality of components among a compressor, a first heat exchanger, a second heat exchanger, a condenser, a first evaporator, a second evaporator, a first expansion valve, a second expansion valve, and a third expansion valve according to needs; and
a water circuit provided with a cooling liquid and comprising a corresponding circuit formed through a plurality of components among the first heat exchanger, a first water pump, a drive assembly, a first four-way valve, a second four-way valve, a battery assembly, a second water pump, a three-way valve, and the second heat exchanger according to needs.

2. The thermal management system according to claim 1, further comprising:
an air conditioner main unit comprising a first heat exchange air duct, a second heat exchange air duct and a circulating air duct, wherein:
the first heat exchange air duct is provided with a condenser, a first air inlet end and a first air outlet end, the first air inlet end comprises a first air inlet communicated with a circulating air inlet and a second air inlet communicated with an outside of a vehicle, and the first air outlet end is respectively communicated with a first air outlet communicated with an inside of the vehicle and a second air outlet communicated with the outside of the vehicle;
the second heat exchange air duct is provided with the first evaporator, a second air inlet end and a second air outlet end, the second air inlet end comprises a third air inlet communicated with the circulating air inlet and a fourth air outlet communicated with the outside of the vehicle, and the second air outlet end is respectively communicated with a third air outlet communicated with the inside of the vehicle and the fourth air outlet communicated with the outside of the vehicle; and
the circulating air duct is configured to recycle an air after heat exchange through the first heat exchange air duct and circulate the air to the first air inlet.

3. The thermal management system according to claim 2, wherein the refrigerant circuit comprises a first circuit and a second circuit, the first circuit is a closed circuit formed by the compressor, the second heat exchanger, the condenser, the first expansion valve, and the first heat exchanger connected in series in sequence, the second circuit is a closed circuit formed by the first evaporator, the second expansion valve, the third expansion valve, and the second evaporator connected in series in sequence, a flow channel between the second evaporator and the first evaporator is connected in series with a flow channel between the compressor and the first heat exchanger, and a flow channel between the second expansion valve and the third expansion valve is connected in series with a flow channel between the condenser and the first expansion valve.

4. The thermal management system according to claim 3, wherein the thermal management system has a first heating state;
in the first heating state, the water circuit comprises a motor circuit and a battery circuit connected in parallel through the first four-way valve and the second four-way valve, the motor circuit and the refrigerant circuit are connected in parallel through the first heat exchanger, and the battery circuit and the refrigerant circuit are connected in parallel through the second heat exchanger;
the motor circuit is a closed circuit formed by the first water pump, the drive assembly, the first four-way valve, the first heat exchanger, the second four-way valve, and the three-way valve connected in series in sequence; and the battery circuit is a closed circuit formed by the first four-way valve, the second heat exchanger, the second four-way valve, the second water pump, and the battery assembly connected in series in sequence.

5. The thermal management system according to claim 4, wherein in the first heating state, the first air inlet, the second air inlet, the third air inlet, the fourth air outlet and the circulating air duct are all communicated, and an in-vehicle circulating air inlet, the first air outlet, the second air outlet, the third air outlet and the fourth air inlet are all blocked, so that an air outside the vehicle is configured to enter the first heat exchange air duct for heat exchange and pass through the first circulating air duct; and
a part of the air is configured to enter the first air inlet to continue circulation, and another part of the air is configured to flow into the second heat exchange air duct through the third air inlet for heat exchange and is discharged out of the vehicle.

6. The thermal management system according to claim 3, wherein the thermal management system has a second heating state; and
in the second heating state, the water circuit is connected in parallel with the refrigerant circuit through the first heat exchanger and the second heat exchanger respectively, and the water circuit is configured as a closed circuit formed by the first water pump, the drive assembly, the first four-way valve, the second heat exchanger, the second four-way valve, the second water pump, the battery assembly, the first four-way valve, the first heat exchanger, the second four-way valve, and the three-way valve connected in series in sequence.

7. The thermal management system according to claim 6, wherein in the second heating state, the in-vehicle circulating air inlet, the first air inlet, the second air inlet, the fourth air inlet, the first air outlet and the fourth air outlet are all communicated, and the third air inlet, the second air outlet, the third air outlet and the circulating air duct are all blocked, so that the air after heat exchange through the first heat exchange air duct is discharged into the vehicle and is circulated to the first heat exchange air duct together with an air inside the vehicle.

8. The thermal management system according to claim 1, wherein the drive assembly comprises a first drive motor, a first control assembly, a second drive motor and a second control assembly, the water circuit comprises a first branch and a second branch provided in parallel, the first drive motor and the first control assembly are connected in series to the first branch, and the second drive motor and the second control assembly are connected in series to the second branch.

9. The thermal management system according to any one of claims 1 to 8, further comprising:
a first liquid storage apparatus communicated with the refrigerant circuit to replenish the refrigerant circuit; and/or
a second liquid storage apparatus communicated with the water circuit to replenish the water circuit.

10. A vehicle, **characterized by** comprising the thermal management system according to any one of claims 1 to 9.
